# EUROPEAN PATENT SPECIFICATION

(11) **EP 3 757 436 B1**
(45) Date of publication and mention of the grant of the patent: **11.05.2022**
(21) Application number: 19719902.9
(22) Date of filing: 18.02.2019
(51) Int. Cl.: F16L 5/04, A62C 2/06, E04B 1/94, F16L 55/10, H02G 3/04

(54) **DEVICE FOR PREVENTING THE SPREAD OF FIRE**
VORRICHTUNG ZUM VERHINDERN EINER FEUERAUSBREITUNG
DISPOSITIF POUR ÉVITER LA PROPAGATION DU FEU

(30) Priority: 23.02.2018 NO 20180287
(43) Date of publication of application: 30.12.2020
(73) Proprietor: MARTRA PATENT BOX, S.L., 46012 Valencia (ES)
(72) Inventor: GARCÍA TAMARIT, Raquel, 46012 VALENCIA (ES)
(74) Representative: Herrero & Asociados, S.L.
(86) International application number: PCT/ES2019/070087
(87) International publication number: WO 2019/162546

(56) References cited:
- WO-A-2017/140933
- CA-A1- 2 117 589
- GB-A- 2 376 706
- US-B1- 6 820 382

## Description

The present invention relates to conduit systems for air conditioning, electricity, gas, etc. Particularly, the invention relates to a device which, being arranged inside a conduit or duct that surrounds distribution elements (pipes, pipelines, subducts, cables, etc.) existing therein, enables protecting both the conduit and said distribution elements from fire or elevated temperatures.

### BACKGROUND OF THE INVENTION

Currently cable protection devices installed inside a duct or a conduit are well know, such as for example those described in document ES2304924 relating to a seal packing to pass conduits through a wall or document ES2359861 relating to a conduit duct with layer sequence. Said packing or duct have solid cylindrical metallic bodies, with circular configurations inside them in the form of collars and the inner faces of which are at least partially covered by elastomeric material, wherein the cables can pass through said circular configurations thus protecting the conduit against the entry of unwanted elements. Said bodies in the form of collars are located on the outside of the conduit and cannot be placed on the inside due to the configuration thereof, so they are only useful for the arrangement thereof at the ends or on the mouth of a conduit, the drawback being that the innermost areas of the conduit are left unprotected, which is where a large number of distribution elements are usually found. Furthermore, they are expensive, heavy and are made up of a large number of elements such as the solid metallic body itself, the elastomeric parts as well as screws, nuts and fixing washers, and since the cylindrical solid bodies and circular inner configurations or collars themselves are already pre-defined with specific dimensions and sections, which on occasions do not coincide with the section of the conduits or the distribution elements to be protected, the ability to adapt to different sizes and sections thereof is limited, failing to protect the installations against the spread of fire through cables or distribution elements.

Document US 6,820,382 B1 discloses a firestop device with at least one elongate strip of flexible intumescent fire barrier felt material.

### OBJECT OF THE INVENTION

The present invention tries to solve the previously described problems relating to documents ES2304924 and ES2359861, by providing protection against the spread of fire to distribution elements (pipes, pipelines, subducts, cables, etc.) that are found inside the conduits, as well as the latter, and even installations linked to or derived from a supply line, such conduits or ducts located on both public and private roads (buried, aerial, embedded in walls or floors), such as in buildings, installations, ships and others. The invention is easy to install and inexpensive, fulfilling the functions of a device that limits the introduction of foreign elements, such as small stones, gravel, rodents, insects, liquids, etc. To this end, the invention proposes a tight and flexible container, preferably a closed bag, with two opposite faces that comprise four sides, the two faces being joined together along said four sides. Thus, the container is suitable for arrangement thereof around the distribution elements housed inside a conduit and enclosing them. It further comprises at least two strips of a heat expandable material that prevents the spread of fire, each arranged in the proximity and parallel to two first sides opposite each other of the flexible container, the thickness of each of said at least two strips being comprised between 2.5 ±1 mm.

### DESCRIPTION OF THE DRAWINGS

As a complement to the present description and for the purpose of helping to make the characteristics of the invention more readily understandable, in accordance with a preferred practical exemplary embodiment thereof, this description is accompanied by a set of drawings constituting an integral part thereof, which by way of illustration and not limitation represent the following:
Figure 1 shows a view of a first exemplary embodiment of the device object of the invention, the container comprising therein two strips arranged on two opposite sides thereof.
Figure 2 shows a view of a second exemplary embodiment, the container internally comprising the strips, a chamber, and externally comprising the sealing tape and the activation tape.

### DESCRIPTION OF THE INVENTION

The invention relates to a device comprising a tight and flexible container (3), which is substantially flat (the thickness thereof is negligible with respect to the surface of the two main faces thereof but is noticeable when the container is inflated, as will be seen below). The container is preferably a closed bag and is, as a result of the flexibility thereof, suitable for arrangement around the distribution elements housed inside a conduit and enclosing them. It comprises two opposite faces each with four sides, the two faces being joined along said four sides and at least two strips (4) of a heat expandable material (increases in volume) each arranged in the proximity and parallel to two first sides (5, 5') of the flexible container (3) opposite each other, the thickness of each of said at least two strips (4) being comprised between 2.5 ±1 mm.

The container is rolled up by facing the second sides thereof, these being opposite each other and transverse to the first sides, such that the container is introduced into the conduit in a way that it surrounds the distribution elements. The at least two strips (4) are arranged parallel to the first two sides (5) of the container (3). Once the container (3) is placed inside the conduit, the strips are arranged concentrically to said conduit.

The strips may be arranged on one face of the container (3) or on two opposite faces or even one inside and one outside the container but always such that when surrounding the distribution elements and enclosing them, one of the strips will be at the farthest point from the mouth of the conduit and the other will be closer to said mouth. This way, the container (3) comprises protection for the conduit in opposing parts, and regardless of where the fire spreads, whether from the mouth of the conduit or from a central area thereof, the distribution elements will be well protected.

Thus, in the event of an accidental case in which the fire starts or spreads through the interior of the conduit, the container (3) burns but the strips (4), made of glass fiber, graphite or a combination of both, rapidly and considerably increase their volume creating a compact seal in the interior section of the conduit, preventing the fire and/or smoke from spreading through the interior thereof.

Preferably, at least one of the faces of said strips (4) comprises an adhesive for adhesion on any of the surfaces of the container (3). Preferably, it will be on the inner surface of the container (3), since if it is the outer surface, there is a greater probability that they get wet or degrade, and this could affect the properties thereof.

Preferably, the interior of the container (3) is subjected to vacuum, with the strips (4) inside, such that in the event of accidental fire, the strips (4) expand increasing their volume inside the container (3), acting as a physical barrier against the fire and preventing it from spreading.

Preferably, at least two strips are made of fabric comprising glass fiber, graphite or a combination of both, with an expansion temperature of approximately from 150°C.

It is also foreseen that there may be means for inflating the container (3) externally or internally thereto.

In a preferred embodiment, not shown, said means for inflating the container (3) are external, such as a portable air compressor.

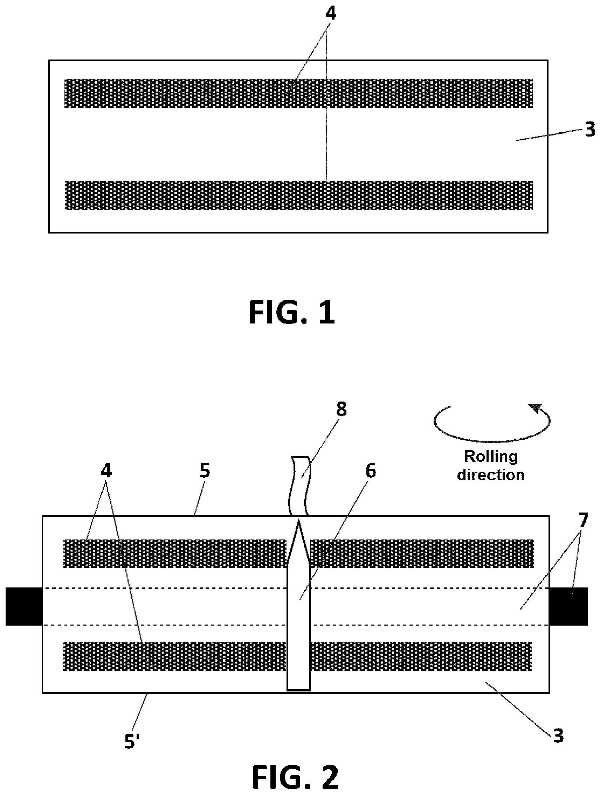

In a second embodiment shown in Figure 2, the means for inflating the container (3) are arranged therein, comprising a gas or compressed liquid chamber (6) which upon opening or rupture gradually inflates the container (3) in order to meet the additional possibility of sealing the interior of the conduit against external elements such as small stones, gravel, dust, insects, rodents, liquids, etc. The container (3) can comprise means (8) for rupturing or opening the chamber from outside the container (3).

In both preferred embodiments, the interior of the container (3) can be subjected to vacuum.

The container (3) preferably comprises at least one butyl or rubber adhesive tape (7) located between said at least two strips (4) on the outer surface of the container (3) to enable it to be bonded to the inner walls of the conduit, preventing the displacement thereof and the passage of unwanted bodies inside the conduit, thus achieving the desired tightness.

Preferably the width of each of said at least two strips (4) is comprised between 25 ± 10 mm.

A person skilled in the art will be able to verify that several embodiments may be combined without departing from the scope of the invention as claimed.

## Claims

1. A device for preventing the spread of fire in a conduit and in the distribution elements housed inside said conduit, **characterized in that** it comprises:
- a tight and flexible container (3), preferably a closed bag, with two opposite faces that comprise two longitudinal and two transversal sides, the two faces being joined along said four sides,
- at least two strips (4) of a heat expandable material that prevents the spread of fire, each arranged longitudinally and parallel to the longitudinal sides (5, 5') opposite each other of a same face of the flexible container (3),
- the thickness of each of said at least two strips being comprised between 2.5 ±1 mm, **characterised in that** one strip is arranged in proximity of one longitudinal side (5) and the other strip in proximity of the other longitudinal side (5'),

2. The device for preventing the spread of fire according to claim 1, **characterized in that** the at least two strips (4) are arranged inside the flexible container (3).

3. The device for preventing the spread of fire according to any one of claims 1 or 2, **characterized in that** the at least two strips (4) are arranged outside the flexible container (3).

4. The device for preventing the spread of fire according to any one of the preceding claims, **characterized in that** the at least two strips (4) comprise an adhesive on at least one of their faces, the strips being adhered by means of said adhesive to the flexible container (3).

5. The device for preventing the spread of fire according to any one of the preceding claims, **characterized in that** the interior of the flexible container (3) is subjected to vacuum.

6. The device for preventing the spread of fire according to any one of the preceding claims, **characterized in that** expandable material of the at least two strips (4) comprises glass fiber, graphite or a combination of both.

7. The device for preventing the spread of fire according to any one of the preceding claims, **characterized in that** the flexible container (3) comprises therein a gas or compressed liquid chamber (6) suitable for, upon opening or rupture thereof, gradually inflating the flexible container (3).

8. The device for preventing the spread of fire according to any one of the preceding claims, **characterized in that** it comprises at least one butyl or rubber adhesive tape (7) located between said at least two strips (4) on the outer surface of the flexible container (3).

9. The device for preventing the spread of fire according to any one of the preceding claims, **characterized in that** the width of each of said at least two strips (4) is comprised between 25 ± 10 mm.

## Patentansprüche

1. Vorrichtung zum Verhindern des Ausbreitens von Feuer in einer Rohrleitung und in den Verteilerelementen, die innerhalb dieser Rohrleitung untergebracht sind, **dadurch gekennzeichnet, dass** sie umfasst:
- einen dichten und flexiblen Behälter (3), vorzugsweise eine geschlossene Tasche, mit zwei zueinander entgegengesetzten Stirnflächen, die zwei Längsseiten und zwei Querseiten umfassen, wobei die beiden Stirnflächen entlang der vier Seiten verbunden sind,
- mindestens zwei Streifen (4) eines sich durch Wärme ausdehnbaren Materials, das das Ausbreiten von Feuer verhindert, wobei alle in Längsrichtung und parallel zu den Längsseiten (5, 5') einander gegenüberliegend auf einer gleichen Stirnfläche des flexiblen Behälters (3) angeordnet sind,
- wobei die Dicke eines jeden der mindestens zwei Streifen im Bereich von 2,5 +/- 1 mm liegt, **dadurch gekennzeichnet, dass**
ein Streifen in der Nähe einer Längsseite (5) angeordnet ist und der andere Streifen in der Nähe der anderen Längsseite (5') angeordnet ist.

2. Vorrichtung zum Verhindern des Ausbreitens von Feuer nach Anspruch 1, **dadurch gekennzeichnet, dass** die mindestens zwei Streifen (4) innerhalb des flexiblen Behälters (3) angeordnet sind.

3. Vorrichtung zum Verhindern des Ausbreitens von Feuer nach einem der Ansprüche 1 oder 2, **dadurch gekennzeichnet, dass** die mindestens zwei Streifen (4) außerhalb des flexiblen Behälters (3) angeordnet sind.

4. Vorrichtung zum Verhindern des Ausbreitens von Feuer nach einem der vorhergehenden Ansprüche, **dadurch gekennzeichnet, dass** die mindestens zwei Streifen (4) einen Klebstoff auf mindestens einer ihrer Stirnflächen umfassen, wobei die Streifen mithilfe des Klebstoffs an den flexiblen Behälter (3) geklebt sind.

5. Vorrichtung zum Verhindern des Ausbreitens von Feuer nach einem der vorhergehenden Ansprüche, **dadurch gekennzeichnet, dass** das Innere des flexiblen Behälters (3) mit einem Unterdruck beaufschlagt ist.

6. Vorrichtung zum Verhindern des Ausbreitens von Feuer nach einem der vorhergehenden Ansprüche, **dadurch gekennzeichnet, dass** ausdehnbares Material der mindestens zwei Streifen (4) Glasfaser, Graphit oder eine Kombination davon umfasst.

7. Vorrichtung zum Verhindern des Ausbreitens von Feuer nach einem der vorhergehenden Ansprüche, **dadurch gekennzeichnet, dass** der flexible Behälter (3) darin eine Kammer (6) mit Gas oder komprimierter Flüssigkeit umfasst, die geeignet ist, um beim Öffnen oder Zerbrechen derselben den flexiblen Behälter (3) allmählich aufzublähen.

8. Vorrichtung zum Verhindern des Ausbreitens von Feuer nach einem der vorhergehenden Ansprüche, **dadurch gekennzeichnet, dass** sie mindestens ein Klebeband (7) aus Butyl oder Gummi umfasst, das zwischen den mindestens zwei Streifen (4) an der Außenoberfläche des flexiblen Behälters (3) angeordnet ist.

9. Vorrichtung zum Verhindern des Ausbreitens von Feuer nach einem der vorhergehenden Ansprüche, **dadurch gekennzeichnet, dass** die Breite jedes der mindestens zwei Streifen (4) im Bereich von 25 +/- 10 mm liegt.

## Revendications

1. Dispositif pour empêcher la propagation d'incendie dans un conduit et dans les éléments de distribution logés à l'intérieur dudit conduit, **caractérisé en ce qu'**il comprend :
- un conteneur hermétique et souple (3), de préférence un sac fermé, ayant deux faces opposées qui comportent deux côtés longitudinaux et deux côtés transversaux, les deux faces étant jointes le long desdits quatre côtés,
- au moins deux bandes (4) d'un matériau thermo-expansible qui empêche la propagation d'incendie, chacune agencée longitudinalement et parallèlement aux côtés longitudinaux (5, 5') opposés l'un à l'autre d'une même face du conteneur souple (3),
- l'épaisseur de chacune desdites au moins deux bandes étant comprise entre 2,5 ± 1 mm, **caractérisé en ce qu'**une bande est disposée à proximité d'un côté longitudinal (5) et l'autre bande à proximité de l'autre côté longitudinal (5').

2. Dispositif pour empêcher la propagation d'incendie selon la revendication 1, **caractérisé en ce que** les au moins deux bandes (4) sont disposées à l'intérieur du conteneur souple (3).

3. Dispositif pour empêcher la propagation d'incendie selon l'une quelconque des revendications 1 ou 2, **caractérisé en ce que** les au moins deux bandes (4) sont disposées à l'extérieur du conteneur souple (3).

4. Dispositif pour empêcher la propagation d'incendie selon l'une quelconque des revendications précédentes, **caractérisé en ce que** les au moins deux bandes (4) comportent un adhésif sur au moins une de leurs faces, les bandes étant collées au moyen dudit adhésif au conteneur souple (3).

5. Dispositif pour empêcher la propagation d'incendie selon l'une quelconque des revendications précédentes, **caractérisé en ce que** l'intérieur du conteneur souple (3) est soumis à un vide.

6. Dispositif pour empêcher la propagation d'incendie selon l'une quelconque des revendications précédentes, **caractérisé en ce que** le matériau expansible des au moins deux bandes (4) comprend de la fibre de verre, du graphite ou une combinaison des deux.

7. Dispositif pour empêcher la propagation d'incendie selon l'une quelconque des revendications précédentes, **caractérisé en ce que** le conteneur souple (3) comporte à l'intérieur une chambre à gaz ou à liquide comprimé (6) adaptée pour, lors de son ouverture ou de sa déchirure, gonfler progressivement le conteneur souple (3).

8. Dispositif pour empêcher la propagation d'incendie selon l'une quelconque des revendications précédentes, **caractérisé en ce qu'**il comprend au moins un ruban adhésif en butyle ou en caoutchouc (7) situé entre lesdites au moins deux bandes (4) sur la surface extérieure du conteneur souple (3).

9. Dispositif pour empêcher la propagation d'incendie selon l'une quelconque des revendications précédentes, **caractérisé en ce que** la largeur de chacune desdites au moins deux bandes (4) est comprise entre 25 ± 10 mm.
